# EUROPÄISCHE PATENTSCHRIFT

(11) **EP 1 221 361 B1**
(45) Veröffentlichungstag und Bekanntmachung des Hinweises auf die Patenterteilung: **24.05.2006**
(21) Anmeldenummer: 02000307.5
(22) Anmeldetag: 03.01.2002
(51) Int. Cl.: B26D 1/00, B25J 15/00, B26D 7/32, B26D 1/06

(54) **Verfahren zum Schneiden eines Lebensmittelprodukts mittels eines von einem Roboter geführten Schneidmittels**
Method for cutting food with cutting means controlled by a robot
Procédé pour découper des matières alimentaires par des moyens de coupe contrôlés par un robot

(30) Priorität: 05.01.2001 DE 10100402
(43) Veröffentlichungstag der Anmeldung: 10.07.2002
(73) Patentinhaber: ALPMA Alpenland Maschinenbau GmbH, 83543 Rott am Inn (DE)
(72) Erfinder: Julinek, Stefan, 83253 Rimsting (DE)
(74) Vertreter: Manitz, Finsterwald & Partner GbR

(56) Entgegenhaltungen:
- WO-A-91/04670
- WO-A-98/42196
- DE-C- 19 650 254
- DE-U- 9 412 378
- US-A- 4 847 954
- US-A- 5 372 540

## Beschreibung

Die Erfindung betrifft ein Verfahren zum Schneiden eines Lebensmittelprodukts, insbesondere eines Käseprodukts, mittels eines Schneidmittels in Scheiben, sowie eine Verwendung des Verfahrens.

Es sind Verfahren und Vorrichtungen bekannt, bei denen ein flächiges Schneidmesser innerhalb zweier einander gegenüberstehender Schienen ab- und aufwärts bewegt wird, um jeweils eine Scheibe von einem in entsprechenden Zufuhrschritten bewegten Käseprodukt abzuschneiden (Guillotine-Anordnung). Problematisch ist bei manchen Weichkäsearten ein erwünschtes Vereinzeln der abgeschnittenen Scheiben, da diese ohne mechanische Hilfsmittel an dem Schneidmesser haften bleiben. Nachteilig ist bei Käseprodukten allgemein ferner, daß aufgrund der Elastizität des Käseprodukts je nach verbleibender Restmenge Scheiben mit unterschiedlicher Dicke oder mit unterschiedlichem Querschnittsprofil abgeschnitten werden.

Der DE-U-9412378 offenbart ein Verfahren zum Schmeiden eines Käseprodukts, mittels eines Schneidmittels in Scheiben, bei dem das Schneidmittel gemäß einer Schneidbewegung geführt wird, wobei zusätzlich das Schneidmittel gemäß einer Vereinzelungsbewegung zum Lösen einer abgeschnittenen Scheibe von dem Schneidmittel geführt wird, wobei die Vereinzelungsbewegung des Schneidmittels mit einer Kippbewegungs Komponente erfolgt, die um eine horizontale Achse gerichtet ist.

Eine Aufgabe der Erfindung besteht darin, die genannten Nachteile zu beseitigen und insbesondere ein Vereinzeln von abgeschnittenen Käsescheiben sowie eine einfache Anpassung des Verfahrens an unterschiedliche Käsearten zu ermöglichen.

Diese Aufgabe wird durch ein Verfahren mit den Merkmalen des Anspruchs 1 gelöst.

Der Einsatz von Robotern ist in grundlegend anderen Industriebereichen üblich, beispielsweise bei der Fertigung in der Automobilindustrie. Dort werden Roboter insbesondere für Schwerlast-Arbeiten oder für gesundheitsgefährdende Arbeiten, beispielsweise Lackieren, eingesetzt.

Im Rahmen der Erfindung wurde erkannt, daß industrielle Standardroboter, beispielsweise mit vier oder sechs Bewegungsachsen, inzwischen eine hinsichtlich der Anschaffung kostengünstige und hinsichtlich der technischen Verwendbarkeit und Anpaßbarkeit hinreichende Alternative zu einer Sonderanfertigung einer Schneidvorrichtung für Lebensmittelprodukte sind. Moderne Standardroboter können sowohl hinsichtlich ihrer Anordnung als auch ihrer Steuerung mit geringem Aufwand an unterschiedliche Schneidanforderungen, insbesondere an die für unterschiedliche Käsearten geltenden Besonderheiten angepaßt werden. Im wesentlichen ist lediglich eine Anpassung bzw. ein Umschreiben des Steuerungsprogramms erforderlich.

Vor allem trifft dies für etwaige zusätzliche Bewegungsvorgänge mit weiteren Freiheitsgraden zu, die für das Vereinzeln einer abgeschnittenen Scheibe oder für die Gewährleistung einer konstanten Scheibendicke oder eines gleichbleibenden Scheibenprofils erforderlich sind.

Die Erfindung umfaßt auch das Abschneiden lediglich einer einzelnen Scheibe, beispielsweise an einer Stirnseite des Lebensmittelprodukts, sowie das Schneiden des Lebensmittelprodukts in Stücke.

Das Schneidmittel kann von dem Roboter gemäß einer Schneidbewegung und vorzugsweise zusätzlich gemäß einer Vereinzelungsbewegung geführt werden. Die Schneidbewegung ist vertikal, schräg oder entlang einer beliebigen, beispielsweise konkaven oder konvexen, Kurvenform nach unten gerichtet. Sie kann zusätzlich eine horizontale Folgebewegungskomponente besitzen, um einer gleichzeitigen Transportbewegung des Lebensmittelprodukts während des Schneidens zu folgen. An die vom Roboter geführte Schneidbewegung kann sich eine zumindest im wesentlichen nach oben gerichtete Rückzugsbewegung des Schneidmittels anschließen.

Das Schneidmittel kann während der Schneidbewegung in einer vertikalen Ausrichtung gehalten werden, oder - insbesondere bei Verwendung eines einseitig geschliffenen Schneidmessers - in einer geneigten Ausrichtung. Auch hier ermöglicht die Verwendung des Roboters eine flexible Anpassung an die konkreten Gegebenheiten.

Die genannte Vereinzelungsbewegung des Schneidmittels kann unterschiedliche Bewegungskomponenten aufweisen, insbesondere eine horizontale, von dem Lebensmittelprodukt weggerichtete Abfuhrbewegungskomponente, eine nach oben gerichtete Aufwärtsbewegungskomponente und/oder eine Kippbewegungskomponente. Diese verschiedenen Bewegungen können gleichzeitig oder nacheinander erfolgen. Die Kippbewegung dient zum Abwurf oder Auswurf einer abgeschnittenen Scheibe, also zum Lösen dieser Scheibe vom Schneidmittel.

Hierfür ist beispielsweise eine beschleunigte und abrupt verzögerte Neigungsbewegung und/oder eine translatorische, insbesondere horizontale Bewegung möglich. Eine derartige Kippbewegung ist insbesondere dann wichtig und vorteilhaft, wenn als Schneidmittel ein Ultraschall-Schneidmesser verwendet wird, da bei diesem grundsätzlich keine mechanische Unterstützung des Vereinzelns möglich ist: Eine mit dem Ultraschall-Schneidmesser in Kontakt tretende Vereinzelungseinrichtung aus Metall würde das Ultraschall-Schneidmesser beschädigen. Eine Vereinzelungseinrichtung aus Kunststoff würde bei Kontakt mit dem Ultraschall-Schneidmesser schmelzen.

Bei dem Schneidmittel kann es sich um ein Schneidmesser, insbesondere das bereits erwähnte Ultraschall-Schneidmesser handeln, oder um einen oder mehrere insbesondere horizontal gespannte Schneiddrähte. Der besondere Vorteil des Führens eines Ultraschall-Schneidmessers mit einem Roboter liegt in der Möglichkeit, zusätzliche Bewegungen um weitere Freiheitsgrade durchzuführen, um ein sicheres und präzises Separieren der abgeschnittenen Scheiben zu gewährleisten.

Das Schneidmesser besitzt vorzugsweise einen zweiseitigen, symmetrischen Schliff. Ein derartiges Schneidmesser kann sowohl für eine vordere, als auch für eine hintere Stirnseite eines Lebensmittelprodukts eingesetzt werden, so daß gegenüber dem Einsatz asymmetrischer Schneidmesser ein geringerer Lagerhaltungsaufwand erzielt wird. Falls eine asymmetrische Schneidbewegung erforderlich ist, kann diese auch durch Schrägstellung des symmetrisch geschliffenen Schneidmessers erreicht werden, die mittels des erfindungsgemäß zu verwendenden Roboters ohne weiteres verwirklicht werden kann.

Weitere bevorzugte Ausführungsformen der Erfindung sind in den Unteransprüchen beschrieben.

Zusammenfassend ist die Erfindung auf die Verwendung eines Roboters zum Führen eines Schneidmittels zum Schneiden eines Lebensmittelprodukts, insbesondere eines Käseprodukts gerichtet, gemäß des Anspruchs 7, wobei - wie erläutert - viele vorteilhafte Weiterbildungen möglich sind.

Die Erfindung wird nachfolgend beispielhaft unter Bezugnahme auf die Figuren erläutert; in diesen zeigen:
- Fig. 1: eine schematische Perspektivansicht einer erfindungsgemäßen Vorrichtung, und
- Fig. 2: eine Seitenansicht dieser Vorrichtung mit der Illustration einer Schneid- und Vereinzelungsbewegung.

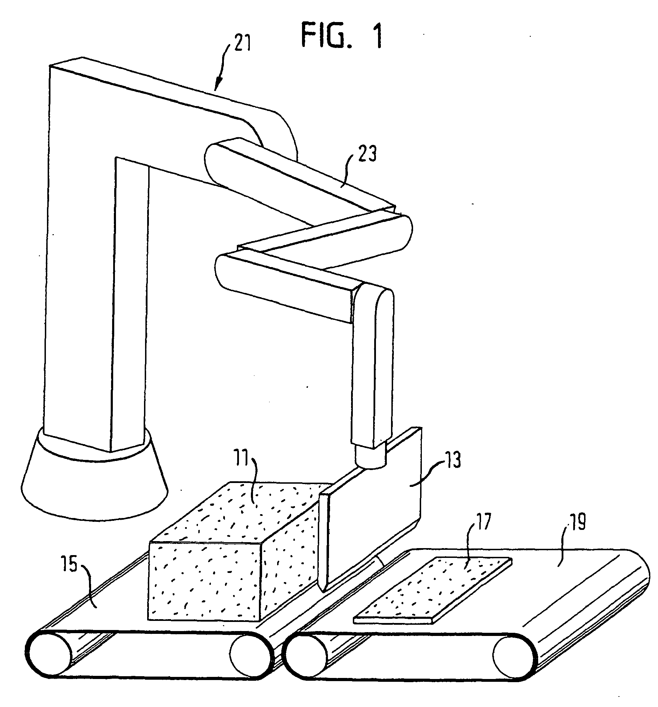

Fig. 1 zeigt einen Käseblock 11, der mittels eines Ultraschall-Schneidmessers 13 geschnitten wird. Der Käseblock 11 liegt auf einem Zufuhrband 15 auf. Eine bereits abgeschnittene Scheibe 17 wird von einem Abfuhrband 19 abtransportiert.

Das Ultraschall-Schneidmesser 13 besitzt eine die vordere Stirnseite des Käseblocks 11 übersteigende Fläche, und es ist an seiner Unterseite zweiseitig geschliffen. Das Ultraschall-Schneidmesser 13 wird von einem Roboter 21 gehalten, und zwar am distalen Ende eines mehrgliedrigen Arms 23. Der Roboter 21 besitzt einen für Anwendungen in der Automobilfertigung bekannten Aufbau, und er weist insgesamt sechs Bewegungachsen auf.

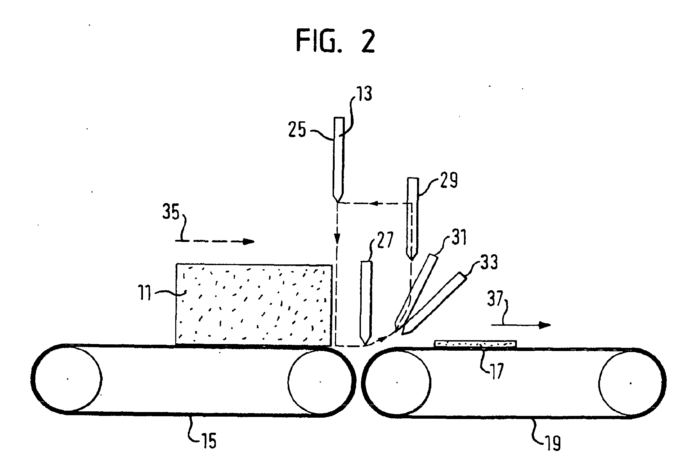

Fig. 2 zeigt in einer Seitenansicht den durch den Roboter 21 veranlaßten Bewegungsablauf des Ultraschall-Schneidmessers 13. Bezüglich der gezeigten Ansicht bewegt sich die Klinge des Ultraschall-Schneidmessers 13 entgegen dem Uhrzeigersinn entlang einer geschlossenen Bahn, die in Fig. 2 gestrichelt dargestellt ist.

Ausgehend von einer Position 25, in der das Schneidmesser 13 vertikal ausgerichtet ist, wird dieses von dem - in Fig. 2 nicht dargestellten - Roboter 21 vertikal nach unten bewegt, bis es den Käseblock 11 vollständig durchschnitten hat. Nach dieser Schneidbewegung bleibt die somit vom Käseblock 11 abgeschnittene Scheibe an dem Schneidmesser 13 haften, und zwar an der - bezüglich der Darstellung gemäß Fig. 2 - rechten Schneidfläche.

Im Anschluß an diese Schneidbewegung wird eine vergleichsweise komplexe Vereinzelungsbewegung durchgeführt: Das Schneidmesser 13 wird zunächst in horizontaler Richtung von dem Käseblock 11 weg bewegt. Nach Erreichen der Position 27 folgt es einer Kurvenbahn, bis es vom Roboter 21 rein vertikal nach oben abgeführt wird (vgl. Position 29).

Entlang dieser Kurvenbahn veranlaßt der Roboter 21 das Schneidmesser 13 zusätzlich zu einer Kippbewegung, bei der das Schneidmesser 13 unter kurzzeitiger Beschleunigung und abruptem Verzögern schräg nach vorne und sofort wieder zurück geneigt wird, wie für die Positionen 31 und 33 gezeigt. Durch diese ruckartige Kippbewegung werden die zwischen dem Schneidmesser 13 und der anhaftenden Scheibe wirkenden Haftkräfte überwunden, und die Scheibe 17 wird dadurch auf das Abfuhrband 19 abgeworfen.

Im Anschluß an die erwähnte, an der Position 29 erfolgende Aufwärtsbewegung des Schneidmessers 13 wird dieses mit vertikaler Ausrichtung in horizontaler Richtung zurück zur Ausgangsposition 25 bewegt, so daß eine weitere Schneidbewegung durchgeführt werden kann.

Der erläuterte Ablauf der Schneid- und Vereinzelungsbewegung kann durch einfache Änderung des Steuerungsprogramms des Roboters 21 kurzfristig variiert werden, um die Schneidvorrichtung an andere Käsearten oder sonstige Schneidvorgaben anzupassen. Dies bringt insbesondere erhebliche Vorteile, soweit das Anhaften einer abgeschnittenen Scheibe an dem Schneidmesser 13 und das hierdurch erforderliche präzise Abwerfen der Scheibe an den Positionen 31 und 33 betroffen ist.

Zur Fig. 2 ist schließlich anzumerken, daß der Käseblock 11 zwischen aufeinanderfolgenden Schneidbewegungen des Schneidmessers 13 schrittweise mittels des Zufuhrbandes 15 in Richtung 35 bewegt wird. Die abgeschnittenen Scheiben 17 werden vom Abfuhrband 19 kontinuierlich in der Richtung 37 abtransportiert.

### Bezugszeichenliste

- 11: Käseblock
- 13: Ultraschall-Schneidmesser
- 15: Zufuhrband
- 17: Scheibe
- 19: Abfuhrband
- 21: Roboter
- 23: Arm
- 25: Position
- 27: Position
- 29: Position
- 31: Position
- 33: Position
- 35: Bewegungsrichtung
- 37: Transportrichtung

## Patentansprüche

1. Verfahren zum Schneiden eines Lebensmittelprodukts, insbesondere eines Käseprodukts (11), mittels eines Schneidmittels (13) in Scheiben (17), bei dem das Schneidmittel (13) von einem Robotor (21) gemäß einer Schneidbewegung geführt wird, wobei zusätzlich das Schneidmittel (13) von dem Robotor (21) gemäß einer Vereinzelungsbewegung zum Lösen einer abgeschnittenen Scheibe von dem Schneidmittel geführt wird, wobei die Vereinzelungsbewegung des Schneidmittels (13) mit einer Kippbewegungskomponente erfolgt, die um eine horizontale Achse gerichtet ist.

2. Verfahren nach Anspruch 1,
**dadurch gekennzeichnet,**
**daß** das Schneidmittel (13) von dem Robotor (21) gemäß einer Schneidbewegung geführt wird, die insbesondere in einer Richtung vertikal nach unten und/oder zusätzlich mit einer horizontalen Folgebewegungskomponente erfolgt,
wobei das Schneidmittel (13) während der Schneidbewegung vorzugsweise in vertikaler Ausrichtung oder in einer bezüglich der Vertikalen von dem Lebensmittelprodukt weggeneigten Ausrichtung gehalten wird.

3. Verfahren nach einem der vorangehenden Ansprüche,
**dadurch gekennzeichnet,**
**daß** die Vereinzelungsbewegung des Schneidmittels (13)
- zunächst mit einer horizontalen, von dem Lebensmittelprodukt (11) weggerichteten Abfuhrbewegungskomponente erfolgt, und/oder
- mit einer nach oben gerichteten Aufwärtsbewegungskomponente erfolgt, die insbesondere gleichzeitig zu einer horizontalen Abfuhrbewegungskomponente vorgesehen ist,
wobei die Kippbewegungskomponente insbesondere gleichzeitig zu der horizontalen Abfuhrbewegungskomponente und/oder gleichzeitig zu der Aufwärtsbewegungskomponente vorgesehen ist.

4. Verfahren nach einem der vorangehenden Ansprüche,
**dadurch gekennzeichnet,**
**daß** es sich bei dem Roboter (21) um einen industriellen StandardRoboter handelt, und/oder
**daß** der Roboter (21) wenigstens vier, vorzugsweise sechs Bewegungsachsen aufweist, und/oder
**daß** der Roboter (21) einen bewegbaren Arm (23) aufweist, an dessen Ende das Schneidmittel (13) befestigt ist.

5. Verfahren nach einem der vorangehenden Ansprüche,
**dadurch gekennzeichnet,**
**daß** es sich bei dem Schneidmittel um ein Schneidmesser, insbesondere ein Ultraschall-Schneidmesser (13), oder um einen oder mehrere Schneiddrähte handelt,
wobei das Schneidmesser (13) insbesondere einen zweiseitigen oder einen einseitigen Schliff aufweist.

6. Verfahren nach einem der vorangehenden Ansprüche,
**dadurch gekennzeichnet,**
**daß** eine von dem Lebensmittelprodukt (11) abgeschnittene und vereinzelte Scheibe (17) von dem Schneidmittel (13) weg transportiert wird, und oder
**dass** das Lebensmittelprodukt (11) jeweils nach oder vor dem Schneiden einer Scheibe (17) schrittweise in Richtung des Schneidmittels (13) oder während des Schneidens einer Scheibe (17) kontinuierlich bewegt wird, wobei das Schneidmittel (13) insbesondere innerhalb einer Ebene gehalten wird, die senkrecht zu der Bewegungsrichtung des Lebensmittelprodukts (11) verläuft.

7. Verwendung eines Roboters (21), vorzugsweise eines industriellen Standard-Roboters, zum Führen eines Schneidmittels (13) zum Schneiden eines Lebensmittelprodukts, insbesondere eines Käseprodukts (11), gemäß einem Verfahren nach einem der vorherigen Ansprüche.

## Claims

1. A method for the cutting into slices (17) of a food product, in particular of a cheese product (11), by means of a cutting means (13), wherein the cutting means (13) is guided by a robot (21) in accordance with a cutting movement, wherein the cutting means (13) is additionally guided by the robot (21) in accordance with a separating movement for the detachment of a cut-off slice from the cutting means, wherein the separating movement of the cutting means (13) takes place with a tilt movement component which is directed around a horizontal axis.

2. A method in accordance with claim 1, **characterized in that** the cutting means is guided by the robot (21) in accordance with a cutting movement which in particular takes place in a direction vertically downwardly and/or additionally with a horizontal secondary movement component; wherein the cutting means (13) is preferably held in a vertical alignment or in an alignment inclined away from the food product with respect to the vertical during the cutting movement.

3. A method in accordance with any one of the preceding claims, **characterised in that** the separating movement of the cutting means (13)
- first takes place with a horizontal removal movement component directed away from the food product (11); and/or
- takes place with an upwardly directed upward movement component which is in particular provided simultaneously with a horizontal removal movement component,
wherein the tilt movement component is in particular provided simultaneously with the horizontal removal movement component and/or simultaneously with the upward movement component.

4. A method in accordance with any one of the preceding claims, **characterised in that** the robot (21) is an industrial standard robot; and/or **in that** the robot (21) has at least four axes of movement, preferably six axes of movement; and/or **in that** the robot (21) has a movable arm (23) to whose end the cutting means (13) is fastened.

5. A method in accordance with any one of the preceding claims, **characterised in that** the cutting means is a cutting blade, in particular an ultrasonic cutting blade (13), or one or more cutting wires, wherein the cutting blade (13) in particular has a two-sided or a one-sided cutting edge.

6. A method in accordance with any one of the preceding claims, **characterised in that** a slice (17) cut off and isolated from the food product (11) is transported away from the cutting means (13); and/or **in that** the food product (11) is moved in the direction of the cutting blade (13) in steps in each case after or before the cutting of a slice (17) or is moved continuously during the cutting of a slice (17), with the cutting means (13) being in particular held within a plane which extends perpendicular to the direction of movement of the food product (11).

7. Use of a robot (21), preferably of an industrial standard robot, for the guidance of a cutting means (13) for the cutting of a food product, in particular of a cheese product (11), in accordance with a method in accordance with any one of the preceding claims.

## Revendications

1. Procédé pour découper un produit alimentaire en tranches (17), en particulier un produit à base de fromage (11), à l'aide d'un organe de coupe (13), dans lequel l'organe de coupe (13) est guidé par un automate (21) suivant un mouvement de coupe, et dans lequel l'organe de coupe (13) est additionnellement guidé par l'automate (21) suivant un mouvement de séparation pour détacher une tranche découpée par l'organe de coupe, ledit mouvement de séparation de l'organe de coupe (13) ayant lieu avec une composante de mouvement de basculement qui est dirigée autour d'un axe horizontal.

2. Procédé selon la revendication 1, **caractérisé en ce que** l'organe de coupe (13) est guidé par l'automate (21) suivant un mouvement de coupe qui a lieu en particulier dans une direction verticale vers le bas et/ou additionnellement avec une composante de mouvement consécutive horizontale,
dans lequel l'organe de coupe (13) est maintenu pendant le mouvement de coupe de préférence en orientation verticale ou dans une orientation inclinée en éloignement par rapport à la verticale du produit alimentaire.

3. Procédé selon l'une des revendications précédentes, **caractérisé en ce que** le mouvement de séparation de l'organe de coupe (13) a lieu
-- tout d'abord avec une composante de mouvement d'évacuation horizontale, dirigée en éloignement du produit alimentaire, et/ou
-- avec une composante de mouvement montante dirigée vers le haut, qui est en particulier prévue simultanément à une composante de mouvement d'évacuation horizontale,
ladite composante de mouvement de basculement étant en particulier prévue simultanément à la composante de mouvement d'évacuation horizontale et/ou simultanément à la composante de mouvement montante.

4. Procédé selon l'une des revendications précédentes, **caractérisé en ce que** l'automate (21) est un automate industriel standard, et/ou
**en ce que** l'automate (21) présente au moins quatre et de préférence six axes de déplacement, et/ou
**en ce que** l'automate (21) comprend un bras mobile (23) sur l'extrémité duquel est fixé l'organe de coupe (13).

5. Procédé selon l'une des revendications précédentes, **caractérisé en ce que** l'organe de coupe est un couteau, en particulier un couteau à ultrasons (13), ou un ou plusieurs fils de coupe,
ledit couteau (13) présentant en particulier un affûtage bilatéral ou un affûtage unilatéral.

6. Procédé selon l'une des revendications précédentes, **caractérisé en ce qu'**une tranche (17) découpée depuis le produit alimentaire (11) et séparée est transportée en éloignement par l'organe de coupe (13), et/ou en ce que le produit alimentaire (11) est déplacé en direction de l'organe de coupe (13) soit par pas à chaque fois avant ou après la découpe d'une tranche (17) soit en continu pendant la découpe d'une tranche (17), ledit organe de coupe (13) étant maintenu en particulier à l'intérieur d'un plan qui est perpendiculaire à la direction de déplacement du produit alimentaire (11).

7. Utilisation d'un automate (21), en particulier d'un automate industriel standard, pour guider un organe de coupe (13) pour la découpe d'un produit alimentaire, en particulier un produit à base de fromage (11), d'après un procédé selon l'une des revendications précédentes.
